(19) Europäisches Patentamt
European Patent Office
Office européen des brevets

(11) **EP 1 832 981 B1**

(12) **EUROPÄISCHE PATENTSCHRIFT**

(45) Veröffentlichungstag und Bekanntmachung des Hinweises auf die Patenterteilung:
**16.09.2015 Patentblatt 2015/38**

(51) Int Cl.:
***G06F 11/10*** *(2006.01)*

(21) Anmeldenummer: **07004207.2**

(22) Anmeldetag: **01.03.2007**

(54) **Fehlerkorrektur- und Fehlererfassungsverfahren zum Auslesen von gespeicherten Informationsdaten und Speichersteuereinrichtung dafür**

Method for error correction and logging for reading out stored data and storage control device therefor

Procédé de correction des erreurs et de détection des erreurs destiné à la lecture de données enregistrées et dispositif de commande d'enregistrement correspondant

(84) Benannte Vertragsstaaten:
**DE FR GB IT NL**

(30) Priorität: **07.03.2006 DE 102006010820**

(43) Veröffentlichungstag der Anmeldung:
**12.09.2007 Patentblatt 2007/37**

(73) Patentinhaber: **Micronas GmbH**
**79108 Freiburg (DE)**

(72) Erfinder: **Franke, Jörg**
**79117 Freiburg (DE)**

(74) Vertreter: **Koch Müller**
**Patentanwaltsgesellschaft mbH**
**Maaßstraße 32/1**
**69123 Heidelberg (DE)**

(56) Entgegenhaltungen:
**WO-A-98/19241     US-A- 4 937 831**
**US-A- 5 608 739     US-A1- 2003 101 405**

**Beschreibung**

Die Erfindung bezieht sich auf ein Fehlerkorrektur- und Fehlererfassungs-Verfahren zum Auslesen von gespeicherten Informationsdaten und Codedaten aus einem Speicher gemäß den oberbegrifflichen Merkmalen des Patentanspruchs 1 bzw. auf eine Speichersteuereinrichtung zum Durchführen eines solchen Verfahrens. Ein solches Verfahren ist z. B. aus WO 98/19241A bekannt.

Zur Erhöhung der Betriebssicherheit von Speichern, beispielsweise DRAM (Dynamic Random Access Memory), SRAM (Static Random Accesss Memory), Flash oder EEPROM (Electrically Erasable Programmable Read-Only Memory/Elektrisch löschbarer programmierbarer Nur-lese-Speicher) in Computern oder auf eingebetteten (embedded) Systemen sind Fehlerkorrektur- und Fehlererfassungs-Verfahren bekannt. Solche Verfahren beruhen üblicherweise auf EC-/ED-Codes (EC: Error Correction, ED: Error Detection) für eine Fehlerkorrektur und Fehlererfassung.

Ein solches Fehlerkorrektur- und Fehlererfassungs-Verfahren beruht auf Grundlagen, wie sie aus Richard W. Hamming: Error Detecting and Error Correcting Code, Bell System Technical General 29 (2): S. 147-160, 1950, bekannt. Um z. 13. n Bit Daten mit einer Single Bit Error Correction (SEC, Einzelbit-Fehlerkorrektur) abzusichern, sind $(1 + \log_2 n)$ Codebits erforderlich. Für eine sogenannte Double Bit Error Detection (DED, Doppel-Bitfehler-Erfassung) ist eine Erweiterung um ein weiteres Bit erforderlich. SEC/DED braucht somit zusammen $(2 + \log_2 n)$ Codebits. Die Auftretenswahrscheinlichkeit der beiden möglichen Fehler, d. h. im Falle eines Speichervorgangs in einem Computer 0 statt 1 und 1 statt 0, wird dabei immer als etwa gleich groß angenommen.

Wie dies auch aus Fig. 1 ersichtlich ist, werden zu 8 zu speichernden Informationsdaten D1 - D8 zusätzlich 5 Codedaten C0 - C4 gebildet und als ein Datenwort mit insgesamt 13 Bit gespeichert. Dabei dient der mit C0 bezeichnete Codedatenwert für die DED.

Zu den zu speichernden Informationsdaten D(8:1) werden Codedaten C(4:1) bestimmt gemäß

$$D1 \times D2 \times D4 \times D5 \times D7 \rightarrow C1, \qquad (1)$$

$$D1 \times D3 \times D4 \times D6 \times D7 \rightarrow C2,$$

$$D2 \times D3 \times D4 \times D8 \rightarrow C3 \text{ und}$$

$$D5 \times D6 \times D7 \times D8 \rightarrow C4,$$

wobei das Verknüpfungssymbol "×" für eine Auswertung der zu speichernden Datenwerte D1 - D8 der Informationsdaten D(8:1) als EXOR-Verknüpfung steht. Dabei werden die Zustände der einzelnen zu speichernden Datenwerte D1 - D8 der Informationsdaten D(8:1) ausgewertet, indem entweder ermittelt wird, ob eine gerade Parität besteht, oder ermittelt wird, ob eine ungerade Parität besteht. Der DED-Codedatenwert C0 wird bestimmt gemäß

$$D1 \times D2 \times D3 \times D4 \times D5 \times D6 \times D7 \times D8 \rightarrow C0. \qquad (2)$$

Zu aus einem Speicher ausgelesenen Informationsdaten D(8:1) und Codedaten C(4:1) wird ein Syndrom S(4:1) mit Syndromdatenwerten S1 - S4, S0 bestimmt gemäß

$$C1 \times D1 \times D2 \times D4 \times D5 \times D7 \rightarrow S1, \qquad (3)$$

$$C2 \times D1 \times D3 \times D4 \times D6 \times D7 \rightarrow S2,$$

$$C3 \times D2 \times D3 \times D4 \times D8 \rightarrow S3 \text{ und}$$

$$C4 \times D5 \times D6 \times D7 \times D8 \rightarrow S4 \text{ sowie}$$

$$C0 \times D1 \times D2 \times D3 \times D4 \times D5 \times D6 \times D7 \times D8 \rightarrow S0. \qquad (4)$$

Bei dieser Verfahrensweise dienen die ersten vier Codedatenwerte C1 - C4 und die ersten vier Syndromdatenwerte S1 - S4 für die SEC und die Code- bzw. Syndromdatenwerte C0, S0 für die DED. Sind die Syndromdatenwerte S0 - S4 auf allen 5 Bit des Syndroms S(4:1, 0) gleich dem Wert 0, ist kein Fehler während des Speicherns und Auslesens der Informationsdaten D(8:1) aufgetreten. Im Falle eines Einfachfehlers zeigen die ersten vier SEC-Syndromdaten S(4:1) die Position des fehlerhaften Bits im ausgelesenen Datenwort (D(8:1), C(4:1)) und der DED-Syndromdatenwert S0 ist gleich 1. Dabei sind die Positionen SP innerhalb des ausgelesenen Datenwortes (D(8:1), C(4:1)) der Reihe nach den einzelnen Codedatenwerten und Informationsdatenwerten zugeordnet in der Reihenfolge: C1, C2, D1, C3, D2, D3, D4, C4, D5, D6, D7, D8. Im Falle eines Zweifachfehlers ist mindestens ein Bit der SEC-Syndromdaten S(4:1) ungleich 0, der DED-Syndromdatenwert S0 aber gleich 0.

Durch eine solche Verfahrensweise wird vorteilhaft sichergestellt, dass Fehler beim Speichern von Daten in einen Speicher oder Fehler beim Auslesen von Daten aus einem Speicher erkannt und im Falle eines Einzel-Bitfehlers sogar korrigiert werden können.

Nachteilhaft ist dabei jedoch der deutlich erhöhte Speicherbedarf zum Speichern nicht nur der Informationsdatenwerte sondern zusätzlich der Codedatenwerte zu deren Absicherung. Au-βerdem ist ein erhöhter Rechenaufwand bzw. Verarbeitungsafwand zum Bestimmen der Codedaten bzw. der Syndromdaten erforderlich. Die Bestimmung der Codedaten und Syndromdaten wird dabei üblicherweise mittels einer Codier- und Decodier-Hardware umgesetzt, welche Bestandteil einer Speichersteuereinrichtung ist.

Die Aufgabe der Erfindung besteht darin, ein Fehlerkorrektur- und Fehlererfassungs-Verfahren zum Auslesen von gespeicherten Informationsdaten aus einem Speicher vorzuschlagen, welches einen geringeren Verarbeitungsaufwand und damit vorzugsweise eine geringeren Hardwareaufwand ermöglicht. Insbesondere soll mittels eines solchen Verfahrens eine Doppel-Bitfehler-Erfassung ermöglicht werden. Außerdem soll eine Speicheranordnung vorgeschlagen werden, welche ein solches Verfahren umsetzt.

Diese Aufgabe wird durch das Fehlerkorrektur- und Fehlererfassungs-Verfahren mit den Merkmalen des Patentanspruchs 1 bzw. die Speicheranordnung mit den Merkmalen des Patentanspruchs 10 gelöst. Vorteilhafte Ausgestaltungen sind Gegenstand von abhängigen Ansprüchen.

Bevorzugt wird demgemäss ein Fehlerkorrektur- und/oder Fehlererfassungs-Verfahren zum Auslesen von gespeicherten Informationsdaten aus einem Speicher, bei dem zusätzlich zu den Informationsdaten Codedaten aus dem Speicher ausgelesen werden und Syndromdaten aus den Informationsdaten und den Codedaten gebildet werden zum Bestimmen von Fehlern und Fehlerpositionen in den ausgelesenen Daten, wobei für eine Mehrfach-Fehlererkennung geprüft wird, ob im Fall ermittelter Fehlerpositionen die deren Speicherpositionen zugeordneten Informationsdaten bzw. Codedaten entweder alle gleich 0 oder alle gleich 1 sind.

Das Auslesen aus einem Speicher erfolgt erfindungsgemäß aus einem Speicher, bei dem die Wahrscheinlichkeit für einen falsch gespeicherten Wert "1" statt "0" gering gegenüber einer Wahrscheinlichkeit für einen falsch gespeicherten Wert "0" statt "1" bzw. umgekehrt ist. Die Wahrscheinlichkeit für einen Fehler in einem bestimmten möglichen Wertzustand ist vorzugsweise gering gegenüber einem anderen Wertzustand ist, worunter insbesondere ein wesentlicher Fehlerhäufigkeitsunterschied im Sinne der Vernachlässigbarkeit in einem der beiden möglichen Fälle zu verstehen ist.

Für eine mindestens 2-fach-Fehlererfassungsmöglichkeit bei mindestens 1-facher Fehlerkorrekturmöglichkeit sind bevorzugt n Informationsdatenwerte der Informationsdaten Codedatenwerte der Codedaten den Informationsdaten im Speicher zugeordnet.

Im Fall eines beim Prüfen ermittelten Wertes "1" an einer ermittelten Fehlerposition liegt dabei gemäß der bevorzugten Ausführungsform ein Mehrfachfehler, insbesondere ein Doppelfehler vor.

Zumindest den Speicherpositionen 1, 2, 4 und 8 sind gemäß der bevorzugten Zuordnung Codedatenwerte zugewiesen und zumindest den Speicherpositionen 3, 5 bis 7 und 9 bis 12 sind dabei Informationsdaten zugeordnet.

Die Syndromdaten können mit entsprechenden Speicherpositionen zugeordneten Paritätsbit als den Codedaten verglichen werden.

Die Codedaten werden gemäß der bevorzugten Zuordnung bestimmt gemäß

$$D1 \times D2 \times D4 \times D5 \times D7 \rightarrow C1, \qquad (1)$$

$$D1 \times D3 \times D4 \times D6 \times D7 \rightarrow C2,$$

$$D2 \times D3 \times D4 \times D8 \rightarrow C3 \text{ und}$$

$$D5 \times D6 \times D7 \times D8 \rightarrow C4,$$

und die Syndromdaten (S(4:1)) werden bestimmt gemäß

$$C1 \times D1 \times D2 \times D4 \times D5 \times D7 \rightarrow S1, \qquad (3)$$

$$C2 \times D1 \times D3 \times D4 \times D6 \times D7 \rightarrow S2,$$

$$C3 \times D2 \times D3 \times D4 \times D8 \rightarrow S3 \text{ und}$$

$$C4 \times D5 \times D6 \times D7 \times D8 \rightarrow S4.$$

Vorzugsweise wird ein Speicher mit unsymmetrischem Fehlerverhalten verwendet.

Bevorzugt wird neben dem Verfahren auch eine Speicheranordnung mit einem Speicher und einer Speichersteuereinrichtung zum zumindest Auslesen von Informationsdaten und den Informationsdaten zugeordneten Codedaten, wobei die Speichersteuereinrichtung ausgebildet und/oder angesteuert ist, ein Fehlerkorrektur- und/oder Fehlererfassungs-Verfahren nach einem solchen Verfahren durchzuführen. Der Speicher ist dabei zweckmäßigerweise ein Speicher mit unsymmetrischem Fehlerverhalten.

Das Verfahren und die Speicheranordnung beruhen dabei auf dem Gedanken, die unsymmetrische Auftretenswahrscheinlichkeit der beiden möglichen Fehler, d. h. 0 statt 1 bzw. 1 statt 0, welche bei einigen Speichertypen auftritt, auszunutzen, um Speicherplatz einzusparen. Dabei kann immer dann ein Bit Codedaten gespart werden, ohne die Betriebssicherheit wirklich zu verringern, wenn eine dieser Wahrscheinlichkeiten vernachlässigbar klein gegenüber der anderen ist.

Eine SEC-DED-Lösung kann dann z. B. mit $(1 + Log_2 n)$ Codebits auskommen. Vorteilhafterweise wird auch die Codier- und Decodierhardware gespart, welche bislang zur Berechnung des speziellen DED-Codedatenwerts C0 bzw. des DED-Syndromdatenwerts S0 erforderlich war, um diese Bit zu erzeugen bzw. zu prüfen.

Für viele EEPROM- oder Flash-Speicher ist die Wahrscheinlichkeit für eine falsche 1, d. h. 1 statt 0, vernachlässigbar klein gegenüber der Wahrscheinlichkeit für eine falsche 0, d. h. 0 statt 1. Entsprechend sind hier für 8 Bit Daten- bzw. Informationsdatenwerte nur noch 4 Bitcode- bzw. Codedatenwerte nötig. Für die SEC wird zunächst in bekannter Art und Weise für die 8 Bitdatenwerte der Informationsdaten nach deren Auslesen aus dem Speicher der 4-Bit SEC-Code C(4:1) gebildet. Für die DED ist aber kein weiterer DED-Codedatenwert C0, d. h. kein Paritätsbit über alle Daten nötig.

Zur Erkennung der Doppelfehler muss lediglich geprüft werden, ob alle gefundenen Fehlerpositionen im ausgelesenen Datenwort (D(8:1), C(4:1)) auch eine 0 enthalten. Wird mindestens eine 1 gefunden, so liegt ein Mehrfachfehler vor. Zweifachfehler werden mit einer solchen Verfahrensweise sicher erkannt. Auch die Erkennung von Dreifachfehlern oder noch mehr Fehlern ist möglich.

Ein Ausführungsbeispiel wird nachfolgend anhand der Zeichnung näher erläutert. Es zeigen:

Fig. 1 schematisch Datenwerte von Informationsdaten und Codedaten, welche aus einem Speicher ausgelesen werden, sowie Verfahrensschritte zur Bestimmung eines eventuellen Fehlers und

Fig. 2 die Informationsdaten und Codedaten sowie eine Anweisung zu deren Verschlüsselungsverfahren beim Abspeichern in einem Speicher.

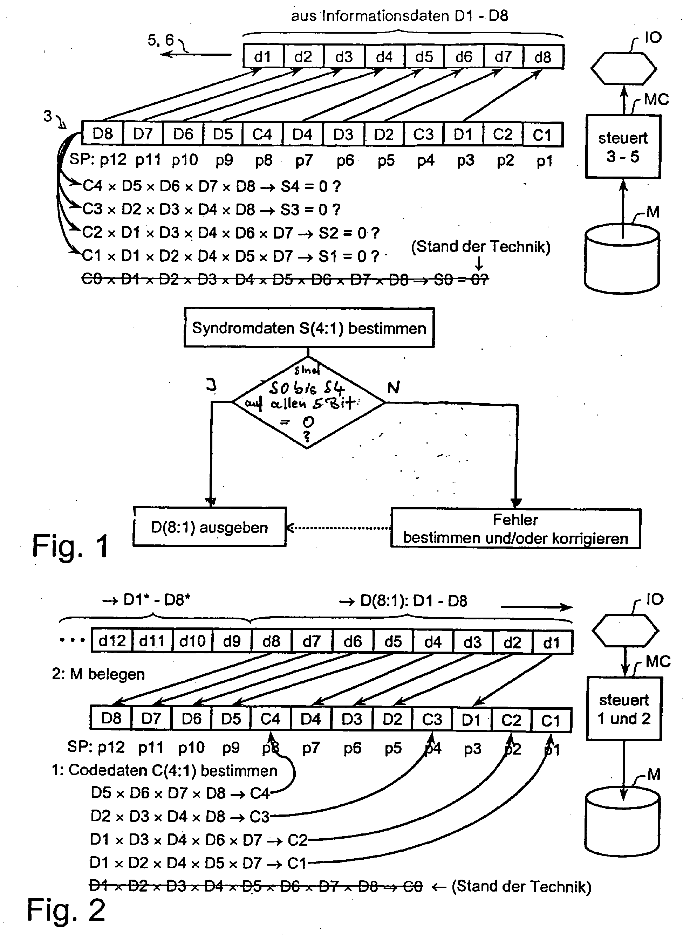

Wie aus Fig. 2 ersichtlich, ist eine Abfolge von Informationsdaten d1, d2, d3, ... d12, ..., welche an einer Ein- und/oder Ausgabeeinrichtung IO anliegt, in einem Speicher M abzuspeichern. Zur Unterscheidung von Codedaten zur Sicherung dieser zu speichernden Daten d1, ... d12 werden die eigentlichen zu speichernden Daten bzw. Nutzdaten als Informationsdaten D(8:1) mit einzelnen Informationsdatenwerten D1 - D8, D1* - D8* bezeichnet und die einen Code bildenden Daten werden als Codedaten C(4:1) mit Codedatenwerten C1 - C4 bezeichnet. Die einzelnen Werte entsprechen dabei jeweils einem Bit. Entsprechend werden nach dem Auslesen aus dem Speicher M Syndromdatenwerte S1 - S4 zu Syndromdaten S(4:1) mit jeweils einem Bit gebildet.

In üblicher Art und Weise kann eine Variation der Verfahrensweise bzw. einer zur Umsetzung ausgebildeten Hardware vorgenommen werden, um beispielsweise an Stelle von jeweils 8 Bit eine größere oder kleinere Anzahl von Bit mit einer entsprechend zugeordneten Anzahl von Codedaten zu verarbeiten.

Zu den zu speichernden Informationsdaten D(8:1) werden Codedaten C(4:1) bestimmt gemäß

$$D1 \times D2 \times D4 \times D5 \times D7 \rightarrow C1, \qquad (1)$$

$$D1 \times D3 \times D4 \times D6 \times D7 \rightarrow C2,$$

$$D2 \times D3 \times D4 \times D8 \rightarrow C3 \text{ und}$$

$$D5 \times D6 \times D7 \times D8 \rightarrow C4,$$

wobei das Verknüpfungssymbol "×" für eine Auswertung der zu speichernden Datenwerte D1 - D8 der Informationsdaten D(8:1) steht.

Dabei werden die Zustände der einzelnen zu speichernden Datenwerte D1 - D8 der Informationsdaten D(8:1) ausgewertet, indem entweder ermittelt wird, ob eine gerade Parität besteht, oder ermittelt wird, ob eine ungerade Parität besteht.

Im Fall einer Prüfung, ob eine gerade Parität besteht, wird geprüft, ob die Gesamtheit der n Positionen eine gerade Anzahl von 1-en hat. Im Falle einer ungeraden Parität wird geprüft, ob eine ungerade Anzahl von 1-en vorliegt.

Zu den aus einem Speicher ausgelesenen Informationsdaten D(8:1) und Codedaten C(4:1) wird, wie in Fig. 1 skizziert, ein Syndrom S(4:1) mit Syndromdatenwerten S1 - S4 bestimmt gemäß

$$C1 \times D1 \times D2 \times D4 \times D5 \times D7 \rightarrow S1, \tag{3}$$

$$C2 \times D1 \times D3 \times D4 \times D6 \times D7 \rightarrow S2,$$

$$C3 \times D2 \times D3 \times D4 \times D8 \rightarrow S3 \text{ und}$$

$$C4 \times D5 \times D6 \times D7 \times D8 \rightarrow S4.$$

Die Verknüpfung erfolgt vorzugsweise wieder in Art einer Paritätsprüfung mit gerader oder ungerader Parität entsprechend des für Codierung gewählten Paritätstyps.

Unter der Annahme einer vernachlässigbar kleinen Wahrscheinlichkeit für das Auftreten einer falschen 1 gegenüber der Wahrscheinlichkeit des Auftretens einer falschen 0 kann auf einen speziellen Codedatenwert C0 für die DED verzichtet werden. Für die SEC, d. h. die Erkennung eines einzelnen Bitfehlers in den Informationsdaten D(8:1) und/oder den Codedaten (C4:1), welche aus dem Speicher M ausgelesen wurden, wird in bekannter Art und Weise zu diesen ausgelesenen Datenwerten D1 - D8, C1 - C4 ein Syndrom mit Syndromdaten S(4:1) gemäß der Formel (3) gebildet. Die Bildung erfolgt dabei wieder in Art einer Paritätsprüfung. Sind alle 4 Syndromdatenwerte S1 - S4 gleich 0, liegt kein Fehler vor. Im Fall eines Einfachfehlers zeigt die Position der 1 in den SEC-Syndromdaten S(4:1) die Position des fehlerhaften Bit im ausgelesenen Datenwort (D(8:1), C(4:1)) in für sich bekannter Art und Weise an.

Gemäß einer bevorzugten Verfahrensweise wird außerdem geprüft, ob alle gefundenen Federpositionen im gelesenen Datenwort (D1 - D8, C(4:1)) eine 0 enthalten. Wird mindestens ein Wert mit einer 1 gefunden, so liegt ein Mehrfachfehler vor. Dabei sind die Positionen SP innerhalb des ausgelesenen Datenwortes (D(8:1), C(4:1)) der Reihe nach den einzelnen Codedatenwerten und Informationsdatenwerten zugeordnet in der Reihenfolge: C1, C2, D1, C3, D2, D3, D4, C4, D5, D6, D7, D8. Bezüglich der Erkennung eines Doppelfehlers wird somit eine Modifikation der bekannten Verfahrensweise vorgenommen.

Zur Verarbeitung von Informationsdaten und Codedaten gemäß eines solche Fehlerkorrektur- und Fehlererfassungs-Verfahrens werden die ausgelesenen Informationsdatenwerte D1 - D8 von der Ein- und/oder Ausgabeeinrichtung 10 einer Speichersteuereinrichtung MC zugeführt. Die Speichersteuereinrichtung MC bestimmt in einem ersten Verfahrensschritt 1 zu den Informationsdaten D(8:1) die Codedaten C(4:1) und belegt in einem zweiten Verfahrensschritt 2 den Speicher M in der dargestellten Art und Weise mit den Informationsdatenwerten D1 - D8 und den Codedatenwerten C1 - C4. Die Belegung erfolgt bei Anwendung der Formeln (1) in der Reihenfolge der Code- bzw. Informationsdatenwerte C1, C2, D1, C3, D2, D3, D4, C4, D5, D6, D7, D8. Bei Anwendung einer anderen Zuordnung der der Informationsdaten D(8:1) zu Codedaten C(4:1) kann gegebenenfalls auch eine andere Reihenfolge zur Belegung der Speicherplätze in dem Speicher M gewählt werden.

Zum Auslesen werden die derart gespeicherten Informationsdaten D(8:1) und Codedaten C(4:1) aus dem Speicher M ausgelesen und der Speichersteuereinrichtung MC zugeführt, welche die Syndromdaten S(4:1) in einem dritten Verfahrensschritt 3 bestimmt. Nachfolgend führt die Speichersteuereinrichtung MC in einem vierten Verfahrensschritt 4 einen Paritätsvergleich durch und bestimmt, ob ein Fehler vorliegt oder nicht. Im Falle eines Einzel-Bitfehlers wird in einem nachfolgenden sechsten Verfahrensschritt 6 geprüft, ob in dem ausgelesenen Datenwort (D(8:1, C(4:1)) aus den Informationsdaten D(8:1) und den Codedaten C(4:1) mindestens ein Datenwert gleich 1 ist, um einen Doppel- oder Mehrfach- Bitfehler zu erkennen. Dann wird in einem siebten Verfahrensschritt 7 der Fehler bestimmt und/oder korrigiert. Falls kein Fehler vorliegt, werden jeweils in einem nachfolgenden Verfahrensschritt 5 die Informationsdatenwerte D1 - D8 als die Informationsdaten D(8:1) ausgegeben. Die Ausgabe kann an eine weitere Instanz innerhalb des selben Prozessors und/oder an die Eingabe- und/oder Ausgabeeinrichtung IO erfolgen.

**Patentansprüche**

1.  Fehlerkorrektur- und Fehlererfassungs-Verfahren für eine mindestens 2-fach-Fehlererfassung bei mindestens 1-facher-Fehlerkorrekturmöglichkeit zum Auslesen (3 - 5) von gespeicherten Informationsdaten (D(8:1)) aus einem Speicher (M), bei dem zusätzlich zu den Informationsdaten (D(1:8)) Codedaten (C(4:1)) aus dem Speicher (M) ausgelesen werden und Syndromdaten (S(4:1)) aus den Informationsdaten (D(8:1)) und den Codedaten (C(4:1)) gebildet werden zum Bestimmen von Fehlern und Fehlerpositionen in den ausgelesenen Daten, wobei ein Speicher (M) mit unsymmetrischem Fehlerverhalten verwendet wird, **dadurch gekennzeichnet, dass** für eine Mehrfach-Fehlererkennung geprüft wird, ob im Fall ermittelter Fehlerpositionen die deren Speicherpositionen (SP) zugeordneten Informationsdaten (D(8:1)) bzw. Codedaten (C(4:1)) entweder alle gleich 0 oder alle gleich 1 sind.

2.  Verfahren nach Anspruch 1, bei dem das Auslesen aus einem Speicher (M) erfolgt, bei dem die Wahrscheinlichkeit für einen falsch gespeicherten Wert "1" statt "0" gering gegenüber einer Wahrscheinlichkeit für einen falsch gespeicherten Wert "0" statt "1" bzw. umgekehrt ist.

3.  Verfahren nach Anspruch 1 oder 2, bei dem die Wahrscheinlichkeit für einen Fehler in einem bestimmten möglichen Wertzustand gering gegenüber einem anderen Wertzustand ist.

4.  Verfahren nach einem vorstehenden Anspruch, bei dem n Informationsdatenwerte(dl - d8) der Informationsdaten (D(8:1)) (1 + $Log_2$n) Code datenwerte (C1 - C4) der Codedaten (C(4-1)) den Informationsdaten (D(8:1)) im Speicher (M) zugeordnet sind.

5.  Verfahren nach einem vorstehenden Anspruch, bei dem im Fall eines beim Prüfen ermittelten Wertes "1" an einer ermittelten Fehlerposition ein Mehrfachfehler, insbesondere ein Doppelfehler vorliegt

6.  Verfahren nach einem vorstehenden Anspruch, bei dem zumindest den Speicherpositionen (SP) 1, 2, 4 und 8 (p1, p2, p4, p8) Codedatenwerte (C1 - C4) zugewiesen sind und zumindest den Speicherpositionen (SP) 3, 5 bis 7 und 9 bis 12 (p3, p5 p7, p9 - p12) Informationsdaten (D(8:1)) zugeordnet sind.

7.  Verfahren nach einem vorstehenden Anspruch, bei dem die Syndromdaten (S(4:1)) mit entsprechenden Speicherpositionen (SP) verglichen werden, wobei den Codedaten Paritätsbits zugeordnet sind.

8.  Verfahren nach einem vorstehenden Ansprüche, bei dem die Codedaten (C(4:1)) bestimmt werden gemäß
    D1 x D2 x D4 x D5 x D7$\rightarrow$C1,
    D1 x D3 x D4 x D6 x D7$\rightarrow$C2,
    D2 x D3 x D4 x D8 $\rightarrow$ C3 und
    D5 x D6 x D7 x D8 -> C4,
    und die Syndromdaten (S(4:1)) bestimmt werden gemäß
    C1 x D1 x D2 x D4 x D5 x D7$\rightarrow$S1
    C2 x D1 x D3 x D4 x D6 x D7 $\rightarrow$ S2,
    C3 x D2 x D3 x D4 x D8 $\rightarrow$ S3 und
    C4 x D5 x D6 x D7 x D8 $\rightarrow$ S4.

9.  Verfahren nach einem vorstehenden Anspruch, bei dem abhängig von einer Datenart mit besonders hohen Sicherheitsanforderungen ein zusätzlicher Codedatenwert (CO) und ein zusätzlicher Syndromdatenwert (SO) verwendet wird.

10. Speicheranordnung mit einem Speicher (M) und einer Speichersteuereinrichtung (MC) zum zumindest Auslesen von Informationsdaten (D(8:1)) und den Informationsdaten (D(8:1)) zugeordneten Codedaten (C(4:1)), **dadurch gekennzeichnet, dass** der Speicher (M) ein Speicher mit unsymmetrischem Fehlerverhalten ist, und dass die Speichersteuereinrichtung (MC) ausgebildet und/oder angesteuert ist, ein Fehlerkorrektur- und Fehlererfassungs-Verfahren nach einem der vorstehenden Ansprüche durchzuführen.

**Claims**

1.  Error correction and error detection method for an at least double-error detection with at least single error correction possibility for reading out (3 - 5) stored information data (D(8:1)) from a memory (M), in which in addition to the information data (D(1:8)) code data (C(4:1)) are read out of the memory (M) and syndrome data (S(4:1)) are formed from the information data (D(8:1)) and the code data (C(4:1)) for determining errors and error positions in the read-out data, wherein a memory (M) with asymmetrical error behaviour is used, **characterised in that** for multiple error recognition it is checked whether in the case of determined error positions the information data (D(8:1)) or code data (C(4:1)) associated with the memory positions (SP) thereof are either all equal to 0 or all equal to 1.

2. Method according to claim 1, in which the reading-out from a memory (M) is carried out in which the probability for a falsely stored value "1" instead of "0" is small by comparison with a probability for a falsely stored value "0" instead of "1" or conversely.

3. Method according to claim 1 or 2, in which the probability for an error in one specific possible value state is small by comparison with another value state.

4. Method according to any one of the preceding claims, in which n information data values (d1 - d8) of the information data (D(8:1)) (1 + $Log_2$n) code data values (C1 - C4) of the code data (C(4:1) are assigned to the information data (D(8:1)) in the memory (M).

5. Method according to any one of the preceding claims, in which in the case of a value "1", which is determined during the check, at a determined error position a multiple error, particularly a double error, is present.

6. Method according to any one of the preceding claims, in which code data values (C1 - C4) are allocated at least to the memory positions (SP) 1, 2, 4 and 8 (p1, p2, p4, p8) and information data (D(8:1)) are assigned at least to the memory positions (SP) 3, 5 to 7 and 9 to 12 (p3, p5 - p7, p9 - p12).

7. Method according to any one of the preceding claims, in which the syndrome data (S(4:1)) are compared with corresponding memory positions (SP), wherein parity bits are associated with the code data.

8. Method according to any one of the preceding claims, in which the code data (C(4:1)) are determined in accordance with
D1 x D2 x D4 x D5 x D7 $\rightarrow$ C1
D1 x D3 x D4 x D6 x D7 $\rightarrow$ C2
D2 x D3 x D4 x D8 $\rightarrow$ C3 and
D5 x D6 x D7 x D8 $\rightarrow$ C4
and the syndrome data (S(4:1)) are determined in accordance with
C1 x D1 x D2 x D4 x D5 x D7 $\rightarrow$ S1
C2 x D1 x D3 x D4 x D6 x D7 $\rightarrow$ S2
C3 x D2 x D3 x D4 x D8 $\rightarrow$ S3 and
C4 x D5 x D6 x D7 x D8 $\rightarrow$ S4.

9. Method according to any one of the preceding claims, in which an additional code data value (CO) and an additional syndrome data value (SO) are used in dependence on a data type with particularly high safety requirements.

10. Memory arrangement with a memory (M) and a memory control device (MC) for reading out at least information data (D(8:1)) and code data (C(4:1)) associated with the information data (D(8:1)), **characterised in that** the memory (M) is a memory with asymmetrical error behaviour and that the memory control device (MC) is constructed and/or activated to perform an error correction and error detection method according to any one of the preceding claims.

**Revendications**

1. Procédé de correction des erreurs et de détection des erreurs pour une détection des erreurs au moins double avec une possibilité de correction des erreurs au moins simple, destiné à la lecture (3 - 5) de données d'informations enregistrées (D(8:1)) à partir d'une mémoire (M), dans lequel on lit à partir de la mémoire (M), en plus des données d'informations (D(8:1)), des données de codes (C(4:1)) et on forme des données de syndromes (S(4:1)) à partir des données d'informations (D(8:1)) et des données de codes (C(4:1)) afin de déterminer des erreurs et des positions d'erreurs dans les données lues, dans lequel on utilise une mémoire (M) avec un gestion d'erreur dissymétrique, **caractérisé en ce que**, pour une reconnaissance multiple d'erreurs, on vérifie si, dans le cas de positions d'erreurs détectées, les données d'informations (D(8:1)) ou les données de codes (C(4:1)) associées à leurs positions dans la mémoire (SP) sont soit toutes égales à 0 soit toutes égales à 1.

2. Procédé selon la revendication 1, dans lequel on effectue la lecture à partir d'une mémoire (M), dans lequel la probabilité d'une valeur enregistrée par erreur «1» au lieu de «0» est faible par rapport à une probabilité d'une valeur enregistrée par erreur «0» au lieu de « 1 » ou inversement.

3. Procédé selon la revendication 1 ou 2, dans lequel la probabilité d'une erreur dans un état de valeur possible déterminé est faible par rapport à un autre état de valeur.

4. Procédé selon l'une quelconque des revendications précédentes, dans lequel n valeurs de données d'informations (dl - d8) des données d'informations (D(8:1)) (1 + $\log_2 n$) valeurs de données de codes (C1 - C4) des données de codes (C(4:1)) sont associées aux données d'informations (D(8:1)) dans la mémoire (M).

5. Procédé selon l'une quelconque des revendications précédentes, dans lequel, dans le cas d'une valeur «1» détectée lors de la vérification, il se trouve à une position d'erreur détectée une erreur multiple, en particulier une erreur double.

6. Procédé selon l'une quelconque des revendications précédentes, dans lequel des valeurs de données de codes (C1 - C4) sont attribuées au moins aux positions de mémoire (SP) 1, 2, 4 et 8 (p1, p2, p4, p8) et des données d'informations (D(8:1)) sont associées au moins aux positions de mémoire (SP) 3, 5 à 7 et 9 à 12 (p3, p5, p7, p9 - p12).

7. Procédé selon l'une quelconque des revendications précédentes, dans lequel on compare les données de syndromes (S(4:1)) avec des positions de mémoire correspondantes (SP), des bits de parité étant associés aux données de codes.

8. Procédé selon l'une quelconque des revendications précédentes, dans lequel on détermine les données de codes suivant
D1 x D2 x D4 x D5 x D7 $\rightarrow$ C1
D1 x D3 x D4 x D6 x D7 $\rightarrow$ C2
D2 x D3 x D4 x D8 $\rightarrow$ C3 et
D5 x D6 x D7 x D8 $\rightarrow$ C4
et on détermine les données de syndromes (S(4:1)) suivant
C1 x D1 x D2 x D4 x D5 x D7 $\rightarrow$ S1
C2 x D1 x D3 x D4 x D6 x D7 $\rightarrow$ S2
C3 x D2 x D3 x D4 x D8 $\rightarrow$ S3 et
C4 x D5 x D6 x D7 x D8 $\rightarrow$ S4.

9. Procédé selon l'une quelconque des revendications précédentes, dans lequel, en fonction d'un type de données avec des exigences de sécurité particulièrement élevées, on utilise une valeur de données de codes supplémentaire (CO) et une valeur de données de syndromes supplémentaire (SO).

10. Dispositif d'enregistrement avec une mémoire (M) et un dispositif de commande d'enregistremenl (MC) destiné au moins à la lecture de données d'informations (D(8:1)) et de données de codes (C(4:1)) associées aux données d'informations (D(8:1)), **caractérisé en ce que** la mémoire (M) est une mémoire avec un gestion d'erreur dissymétrique, et **en ce que** le dispositif de commande d'enregistrement (MC) est configuré et/ou commandé pour exécuter un procédé de correction des erreurs et de détection des erreurs selon l'une quelconque des revendications précédentes.

## Fig. 1

aus Informationsdaten D1 - D8

5, 6

| d1 | d2 | d3 | d4 | d5 | d6 | d7 | d8 |

3

| D8 | D7 | D6 | D5 | C4 | D4 | D3 | D2 | C3 | D1 | C2 | C1 |

SP: p12 p11 p10 p9 p8 p7 p6 p5 p4 p3 p2 p1

$C4 \times D5 \times D6 \times D7 \times D8 \rightarrow S4 = 0$ ?

$C3 \times D2 \times D3 \times D4 \times D8 \rightarrow S3 = 0$ ?

$C2 \times D1 \times D3 \times D4 \times D6 \times D7 \rightarrow S2 = 0$ ?

$C1 \times D1 \times D2 \times D4 \times D5 \times D7 \rightarrow S1 = 0$ ?

(Stand der Technik)

~~$C0 \times D1 \times D2 \times D3 \times D4 \times D5 \times D6 \times D7 \times D8 \rightarrow S0 = 0?$~~

IO

MC

steuert
3 - 5

M

| Syndromdaten S(4:1) bestimmen |

sind
S0 bis S4
auf allen 5 Bit
= 0
?

J          N

| D(8:1) ausgeben | ←········ | Fehler bestimmen und/oder korrigieren |

## Fig. 2

$\rightarrow$ D1* - D8*          $\rightarrow$ D(8:1): D1 - D8

| ··· | d12 | d11 | d10 | d9 | d8 | d7 | d6 | d5 | d4 | d3 | d2 | d1 |

2: M belegen

| D8 | D7 | D6 | D5 | C4 | D4 | D3 | D2 | C3 | D1 | C2 | C1 |

SP: p12 p11 p10 p9 p8 p7 p6 p5 p4 p3 p2 p1

1: Codedaten C(4:1) bestimmen

$D5 \times D6 \times D7 \times D8 \rightarrow C4$

$D2 \times D3 \times D4 \times D8 \rightarrow C3$

$D1 \times D3 \times D4 \times D6 \times D7 \rightarrow C2$

$D1 \times D2 \times D4 \times D5 \times D7 \rightarrow C1$

~~$D1 \times D2 \times D3 \times D4 \times D5 \times D6 \times D7 \times D8 \rightarrow C0$~~ ← (Stand der Technik)

IO

MC

steuert
1 und 2

M

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 9819241 A

**In der Beschreibung aufgeführte Nicht-Patentliteratur**

- **RICHARD W. HAMMING.** Error Detecting and Error Correcting Code. *Bell System Technical General,* 1950, vol. 29 (2), 147-160